# EUROPEAN PATENT APPLICATION

(11) **EP 2 523 489 A1**
(43) Date of publication of application: **14.11.2012**
(21) Application number: 11731862.6
(22) Date of filing: 07.01.2011
(51) Int. Cl.: H04W 16/26, H04J 3/06, H04W 56/00

(54) **MOBILE COMMUNICATION METHOD, MOBILE STATION, AND RELAY NODE**

(30) Priority: 08.01.2010 JP 2010003371
(71) Applicant: NTT DoCoMo, Inc., Tokyo 100-6150 (JP)
(72) Inventor: IWAMURA, Mikio, Tokyo 100-6150 (JP); UMESH, Anil, Tokyo 100-6150 (JP); TAKAHASHI, Hideaki, Tokyo 100-6150 (JP)
(74) Representative: HOFFMANN EITLE
(86) International application number: PCT/JP2011/050215
(87) International publication number: WO 2011/083864

(57) **Abstract**

A mobile communication method according to the present invention comprises: a step A of acquiring, by a mobile station UE, individual transmission timing adjustment information TAd from a relay node RN; a step B of acquiring, by the mobile station UE, shared transmission timing adjustment information TAc broadcast from the relay node RN; and a step C of adjusting, by the mobile station UE, the transmission timing of the signal with respect to the relay node RN, based on the individual transmission timing adjustment information TAd and the shared transmission timing adjustment information TAc.

## Description

### [Technical Field]

The present invention relates to a mobile communication method, a mobile station, and a relay node.

### [Background Art]

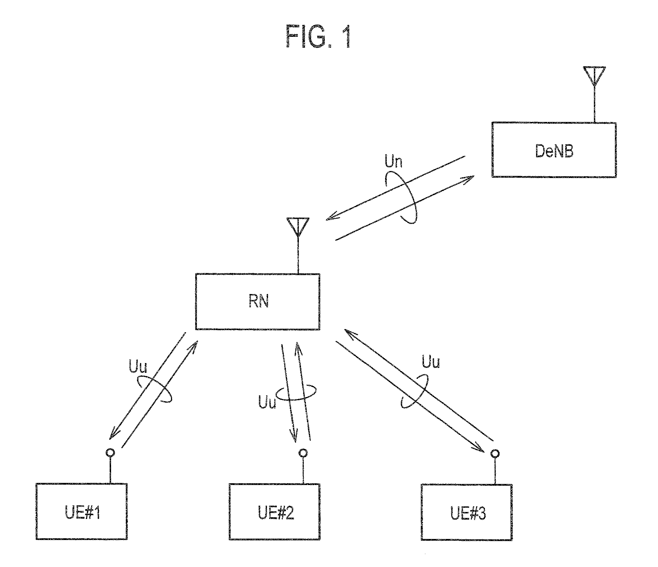

In a mobile communication system of the LTE-Advance scheme for which the 3GPP is developing a standardization, it is possible to provide a relay node RN being able to connect to a radio base station DeNB via a Un interface and to connect to a plurality of mobile stations UE#1 to UE#3 via a Uu interface as illustrated in Fig. 1.

The radio base station DeNB is able to communicate directly with the other mobile stations UE via the Uu interface without passing through the relay node RN.

In order to avoid interference, during a time when a signal is being received from the radio base station DeNB via the Un interface, the relay node RN is unable to transmit a signal to the mobile stations UE#1 to UE#3 via the Uu interface.

Similarly, during a time when a signal is being transmitted to any of the mobile stations UE#1 to UE#3 via the Uu interface, the relay node RN is unable to receive a signal from the radio base station DeNB via the Un interface.

Further, in order to avoid interference, a signal having been transmitted by the plurality of mobile stations UE#1 to UE#3 must arrive at the relay node RN during a predetermined time range. For this reason, the relay node RN uses transmission timing adjustment information TA (Timing Advance) to be able to adjust the transmission timing of the signal in each of the mobile stations UE#1 to UE#3.

In a mobile communication system of the LTE scheme or the LTE-Advance scheme, in order to protect the orthogonality of an uplink signal among the plurality of mobile stations UE, the radio base station performs a control for adjusting the transmission timing of the signal in each of the mobile stations UE so as to be able to receive the uplink signal from each of the mobile stations UE within the predetermined time range.

Further, the mobile stations UE adjust the transmission timing and transmit the uplink signal in conformity with the transmission timing adjustment information TA instructed from the radio base station based on reception timing of a downlink signal received from the radio base station.

Because the relay node RN also shares an uplink line with the other mobile stations UE connected directly to the radio base station DeNB via the Uu interface, it is necessary to adjust the transmission timing and transmit the uplink signal in conformity with the transmission timing adjustment information TA from the radio base station DeNB such that the radio base station DeNB is able to receive the uplink signal from the relay node RN within the predetermined time range.

The amount of adjustment in such transmission timing is dependent on the propagation delay, and therefore is generally dependent on the distance over which signals are being transmitted and received. Accordingly, by virtue of being mobile, it is necessary to adjust such transmission timing.

### [Summary of Invention]

### [Technical Problem]

With such a mobile communication system, it is possible not only for the distance between the relay node RN and each of the mobile stations UE#1 to UE#3 to change, but also for the distance between the relay node RN and the radio base station DeNB to change.

In such a case, the transmission timing for a signal in the relay node RN must be adjusted in conformity with the transmission timing adjustment information TA from the radio base station DeNB.

However, the relay node RN must time-share between the transmission/reception timing for a signal in the Un interface and the transmission/reception timing for a signal in the Uu interface, and therefore, in a case where the transmission timing for an uplink signal in the Un interface changes, the reception timing for the uplink signal in the Uu interface must also change. Specifically, a need arises to apply transmission timing adjustments to all the mobile stations UE subordinate to the relay node RN at the same time.

However, at the present stage, no investigation has been made with respect to a method of adjusting the transmission timing of a signal in each of the mobile stations UE#1 to UE#3 in consideration of such circumstances in such a mobile communication system.

In view whereof, the purpose of the present invention, which has been contrived in view of the foregoing problems, is to provide a mobile communication method, a mobile station, and a relay node whereby the transmission timing of a signal in each of the mobile stations UE#1 to UE#3 can be adjusted efficiently even in a case where the distance between the relay node N and the radio base station DeNB also changes.

### [Solution to Problem]

A first characteristic of the present embodiment is summarized in that a mobile communication method comprising, a step A of acquiring, by a mobile station, individual transmission timing adjustment information from a relay node, a step B of acquiring, by the mobile station, shared transmission timing adjustment information broadcast from the relay node, and a step C of adjusting, by the mobile station, the transmission timing of the signal with respect to the relay node, based on the individual transmission timing adjustment information and the shared transmission timing adjustment information.

A second characteristic of the present embodiment is summarized in that a mobile station, comprising, an acquisition unit configured to acquire individual transmission timing adjustment information from a relay node and to acquire shared transmission timing adjustment information broadcast from the relay node, and a transmission unit configured to adjust the transmission timing of a signal with respect to the relay node, based on the individual transmission timing adjustment information and the shared transmission timing adjustment information.

A third characteristic of the present embodiment is summarized in that a relay node for making an adjustment such that a time when a signal is being received from a radio base station and a time when a signal is being transmitted to a mobile station do not overlap, the relay node comprising, a shared transmission timing adjustment information transmission unit configured to broadcast transmission timing adjustment information for adjusting in a shared manner the transmission timing of signals in mobile stations communicating in a cell subordinate to the relay node, and an individual transmission timing adjustment information transmission unit configured to transmit transmission timing adjustment information for adjusting individually the transmission timing of signals in mobile stations communicating in a cell subordinate to the relay node.

### [Advantageous Effects of Invention]

As has been described above, according to the present invention, there can be provided a mobile communication method, a mobile station, and a relay node whereby the transmission timing of a signal in each of the mobile stations UE#1 to UE#3 can be adjusted efficiently even in a case where the distance between the relay node RN and the radio base station DeNB also changes.

### [Brief Description of Drawings]

[Fig. 1] Fig. 1 is a diagram showing the entire configuration of a mobile communication system according to a first embodiment of the present invention.
[Fig. 2] Fig. 2 is a functional block diagram of a relay node according to the first embodiment of the present invention.
[Fig. 3] Fig. 3 is a functional block diagram of a mobile station according to the first embodiment of the present invention.
[Fig. 4] Fig. 4 is a drawing for explaining the method of adjusting the transmission timing of an uplink signal in the mobile station according to the first embodiment of the present invention.

### [Description of Embodiments]

### (Mobile communication system according to first embodiment of the present invention)

With reference to Fig. 1 to Fig. 4, a mobile communication system according to a first embodiment of the present invention will be described.

The mobile communication system according to the present embodiment is a mobile communication system of the LTE-Advanced scheme, and, as illustrated in Fig. 1, is provided with a radio base station DeNB, a relay node RN, and a plurality of mobile stations UE#1 to UE#3.

A Un interface is configured so as to provide a connection between the radio base station DeNB and the relay node RN, and a Uu interface is configured so as to provide a connection between the relay node RN and each of the mobile stations UE#1 to UE#3.

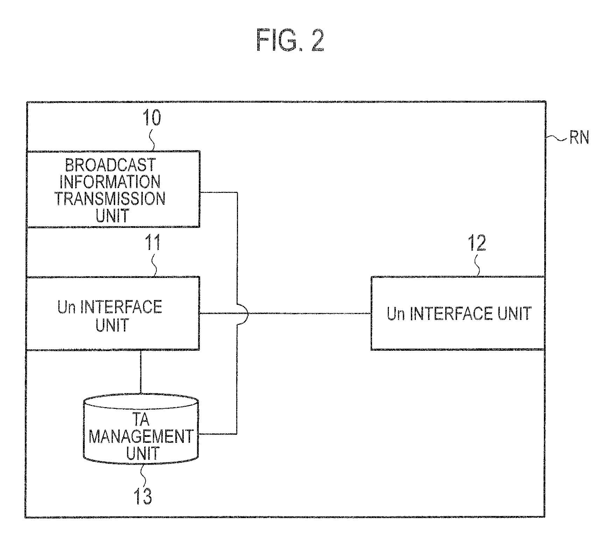

As illustrated in Fig. 2, the relay node RN is provided with a broadcast information transmission unit 10, a Uu interface unit 11, a Un interface unit 12, and a TA management unit 13.

The broadcast information transmission unit 10 is configured to transmit MIB (Master Information Block), SIB (System Information Block), or other form of broadcast information, in a cell subordinate to the relay node RN.

For example, the broadcast information transmission unit 10 is configured to transmit broadcast information including transmission timing adjustment information TAc for adjusting in a shared manner the transmission timing of signals in the mobile stations UE communicating in the cell subordinate to the relay node RN.

The Uu interface unit 11 is configured to communicate with each of the mobile stations UE#1 to UE#3 via the Uu interface.

Herein, the Uu interface unit 11 is configured to transmit a signal addressed to each of the mobile stations UE#1 to UE#3 via PDSCH (Physical Downlink Shared Channel), PDCCH (Physical Downlink Control Channel), or PHICH (Physical HARQ Indicator Channel), during a time when no signal is being received from the radio base station DeNB.

Specifically, the Uu interface unit 11 adjusts the time when a signal is being transmitted to each of the mobile stations UE#1 to UE#3 so as not to overlap with the time when a signal is being received from the radio base station DeNB.

Herein, the Uu interface unit 11 is configured to perform the aforementioned adjustment in consideration of the decoding time of the signal received from the radio base station DeNB, the generation time of the signal addressed to each of the mobile stations UE#1 to UE#3, and the like.

Further, the Uu interface unit 11 is configured to assign transmission timing adjustment information TAd individually to each of the mobile stations UE#1 to UE#3 such that a signal transmitted by each of the mobile stations UE#1 to UE#3 is able to arrive at the relay node RN within a predetermined time range.

The Uu interface unit 11 is configured to transmit the transmission timing adjustment information TAd for adjusting individually the transmission timing of signals in the mobile stations UE communicating in the cell subordinate to the relay node RN by using individual signaling or the like.

The Un interface unit 12 is configured to communicate with the radio base station DeNB via the Un interface.

Herein, the Un interface unit 12 is configured to transmit a signal addressed to the radio base station DeNB via PUSCH (Physical Uplink Shared Channel) or PUCCH (Physical Uplink Control Channel) during a time when no signal is being received from each of the mobile stations UE#1 to UE#3.

Specifically, the Un interface unit 12 adjusts the time when a signal is being transmitted to the radio base station DeNB so as not to overlap with the time when a signal is being received from each of the mobile stations UE#1 to UE#3.

Herein, the Un interface unit 12 is configured to perform the aforementioned adjustment in consideration of the decoding time of the signal received from each of the mobile stations UE#1 to UE#3, the generation time of the signal addressed to the radio base station DeNB, and the like.

The TA management unit 13 is configured to manage the transmission timing adjustment information TAc, which is broadcast in the cell subordinate to the relay node RN, and the transmission timing adjustment information TAd, which is assigned individually to each of the mobile stations UE#1 to UE#3.

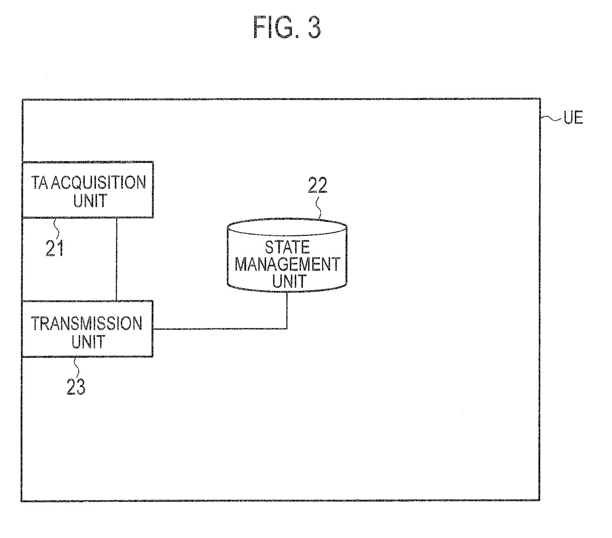

As illustrated in Fig. 3, the mobile station UE is provided with a TA acquisition unit 21, a state management unit 22, and a transmission unit 23.

The TA acquisition unit 21 is configured to acquire the transmission timing adjustment information TAd transmitted by individual signaling or the like from the relay node RN via the Uu interface.

The TA acquisition unit 21 is also configured to acquire the transmission timing adjustment information TAc included in the broadcast information transmitted by the relay node RN. Herein, the TA acquisition unit 21 may be configured to acquire the transmission timing adjustment information TAc periodically.

The state management unit 22 is configured to manage the synchronized state between the mobile stations UE and the relay node RN.

Herein, the state management unit 22 is configured to detect a loss of synchronization in the uplink between the mobile stations UE and the relay node RN in a case where the TA acquisition unit 21 is unable to acquire the transmission timing adjustment information TAc and TAd until a predetermined timer is expired.

Such a predetermined timer is reset when the transmission timing adjustment information TAc and TAd has been received by the TA acquisition unit 21. The value of such a predetermined timer is set for the mobile stations UE by a broadcast or by individual control from the relay node RN.

The predetermined timers may be independently different between the transmission timing adjustment information TAc and the transmission timing adjustment information TAd. As a consequence thereof, the frequency at which the transmission timing adjustment information TAc and TAd are transmitted can be adjusted individually by the relay node RN.

For example, in a case where the relay node RN is installed on a bus, the distance between a mobile station UE in a vehicle and the relay node RN is substantially invariable when the bus is moving, but the distance between the relay node RN and the radio base station DeNB changes significantly. Accordingly, in such a case, the value of predetermined timer for the transmission timing adjustment information TAc is set so as to be brief, and the value of the predetermined timer for the transmission timing adjustment information TAd is set so as to be long, thereby making it possible to reduce the signal amount.

The transmission unit 23 is configured to transmit a signal to the relay node RN via the Uu interface.

Herein, the transmission unit 23 is configured to adjust the transmission timing of the signal to the relay node RN based on the transmission timing adjustment information TAd and the transmission timing adjustment information TAc.

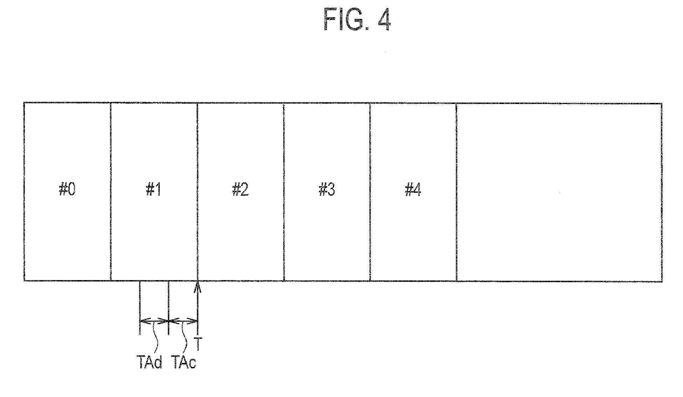

Specifically, as illustrated in Fig. 4, the transmission unit 23 may adjust the transmission timing of the signal to the relay node RN so as to be earlier than a reference timing T by the sum of the time duration specified by the transmission timing adjustment information TAd and the time duration specified by the transmission timing adjustment information TAc.

Herein, the transmission unit 23 is configured to perform the aforementioned adjustment in consideration of the decoding time of the signal received from the relay node RN, the generation time of the signal addressed to the relay node RN, and the like.

The transmission unit 23 is also configured to initiate a random access procedure by transmitting an RA preamble to the relay node RN via PRACH (Physical Random Access Channel) in a case where a loss of synchronization in the uplink between the mobile stations UE and the relay node RN has been detected.

According to the mobile communication system according to the first embodiment of the present invention, each of the mobile stations UE#1 to UE#3 may use the two types of transmission timing adjustment information TA acquired by the relay node RN, i.e., the transmission timing adjustment information TAd and transmission timing adjustment information TAc, to adjust the transmission timing of a signal with respect to the relay node RN; therefore, interference can be avoided even in a case where the distance between the relay node RN and the radio base station DeNB also changes.

The transmission timing adjustment information TAd is used in order to provide support for a case where the distance between the relay node RN and the mobile stations UE subordinate to the relay node RN is different for each of the mobile stations UE, and also to provide support for a case where the mobile stations UE move and the distance from the relay node RN changes.

Meanwhile, the transmission timing adjustment information TAc is used in order to adjust the transmission timing by the same amount at the same time for the mobile stations UE subordinate to the relay node RN in a case where the distance between the relay node RN and the radio base station DeNB has changed. This makes it possible to forgo the need to transmit the transmission timing adjustment information TAd individually to each of the mobile stations UE, and possible to greatly reduce the signal amount.

The characteristics of the present embodiment as described above may be expressed as follows.

A first characteristic of the present embodiment is summarized in a mobile communication method comprising: a step A of acquiring, by the mobile station UE, individual transmission timing adjustment information TAd from the relay node RN; a step B of acquiring, by the mobile station UE, shared transmission timing adjustment information TAc broadcast from the relay node RN; and a step C of adjusting, by the mobile station UE, the transmission timing of the signal with respect to the relay node RN, based on the individual transmission timing adjustment information TAd and the shared transmission timing adjustment information TAc.

In the first characteristic of the present embodiment, in the step C, the mobile station UE may adjust the transmission timing of the signal to the relay node RN so as to be earlier than a reference timing T by the sum of the time duration specified by the individual transmission timing adjustment information TAd and the time duration specified by the shared transmission timing adjustment information TAc.

The first characteristic of the present embodiment may include a step of detecting, by the mobile station UE, a loss of synchronization in the uplink between the mobile stations UE and the relay node RN in a case where the mobile station UE is unable to acquire the transmission timing adjustment information TAd until a predetermined timer for the transmission timing adjustment information TAd (a first timer) is expired; and a step of detecting, by the mobile station UE, a loss of synchronization in the uplink between the mobile stations UE and the relay node RN in a case where the mobile station UE is unable to acquire the transmission timing adjustment information TAc until a predetermined timer for the transmission timing adjustment information TAc (a second timer) is expired, the predetermined timer for the transmission timing adjustment information TAc being different from the predetermined timer for the transmission timing adjustment information TAd.

In the first characteristic of the present embodiment, the predetermined timer for the transmission timing adjustment information TAd may be reset when the transmission timing adjustment information TAd has been acquired, and the predetermined timer for transmission timing adjustment information TAc may be reset when the transmission timing adjustment information TAc has been acquired.

A second characteristic of the present embodiment is summarized in comprising: a TA acquisition unit 21 configured to acquire the individual transmission timing adjustment information TAd from the relay node RN and to acquire shared transmission timing adjustment information TAc broadcast from the relay node RN; and a transmission unit 23 configured to adjust the transmission timing of the signal with respect to the relay node RN, based on the individual transmission timing adjustment information TAd and the shared transmission timing adjustment information TAc.

In the second characteristic of the present embodiment, the transmission unit 23 may adjust the transmission timing of the signal to the relay node RN so as to be earlier than a reference timing T by the sum of the time duration specified by the individual transmission timing adjustment information TAd and the time duration specified by the shared transmission timing adjustment information TAc.

The second characteristic of the present embodiment is summarized in further comprising: a state management unit 22 configured to manage the synchronized state in the uplink between the mobile stations UE and the relay node RN, the state management unit 22 being configured to detect a loss of synchronization in the uplink between the mobile stations UE and the relay node RN in a case where the TA acquisition unit 21 is unable to acquire the transmission timing adjustment information TAd until a predetermined timer for the transmission timing adjustment information TAd is expired, and the state management unit 22 being configured to detect a loss of synchronization in the uplink between the mobile stations UE and the relay node RN in a case where the acquisition unit 23 is unable to acquire the transmission timing adjustment information TAc until a predetermined timer for the transmission timing adjustment information TAc is expired, the predetermined timer for the transmission timing adjustment information TAc being different from the predetermined timer for the transmission timing adjustment information TAd.

In the second characteristic of the present embodiment, the predetermined timer for the transmission timing adjustment information TAd may be reset when the transmission timing adjustment information TAd has been acquired, and the predetermined timer for the transmission timing adjustment information TAc may be reset when the transmission timing adjustment information TAc has been acquired.

A third characteristic of the present embodiment is summarized in a relay node RN for making an adjustment such that a time when a signal is being received from the radio base station DeNB and a time when a signal is being transmitted to a mobile station UE do not overlap, and including: a broadcast information transmission unit 10 configured to broadcast the transmission timing adjustment information TAc for adjusting in a shared manner the transmission timing of signals in mobile stations UE communicating in a cell subordinate to the relay node RN; and a Uu interface unit configured to transmit the transmission timing adjustment information TAd for adjusting individually the transmission timing of signals in the mobile stations UE communicating in a cell subordinate to the relay node RN.

In the embodiment described above, a description has been provided for a method of adjusting the transmission timing using both the shared transmission timing adjustment information TAc and the individual transmission timing adjustment information TAd of the mobile stations; however, the configuration may also be such that only one of these is used. The question of which one to use may be specified to the mobile station UE by an individual control or broadcast from the relay node RN.

In particular, in a case where a mobile station UE not corresponding to the shared transmission timing adjustment information TAc is present, a setting may be made such that only the individual transmission timing adjustment information TAd of the mobile stations is used for the relevant mobile station UE, and a setting may be made such that the shared transmission timing adjustment information TAc is used for the mobile stations UE corresponding to the shared transmission timing adjustment information TAc.

Because the LTE-Advanced scheme requires that backward compatibility for the LTE scheme is ensured, there may be also a mobile station UE of the LTE scheme subordinate to the relay node RN to connect with the relay node RN by using the Uu interface. Such a mobile station UE of the LTE scheme in some cases will not correspond to the shared transmission timing adjustment information TAc.

Further, in order to ascertain whether or not the mobile station UE corresponds to the shared transmission timing adjustment information TAc in the relay node RN and determine the applicable transmission timing adjustment information, information relating to whether or not it corresponds to the shared transmission timing adjustment information TAc may be notified to the relay node RN from the mobile station UE.

It is noted that the operation of the above-described the mobile station UE, the radio base station DeNB or the relay node RN may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile station UE, the radio base station DeNB or the relay node RN. Further, such a storage medium or a processor may be arranged, as a discrete component, in the mobile station UE, the radio base station DeNB or the relay node RN.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a mobile communication method, a mobile station, and a relay node whereby the transmission timing of a signal in each of the mobile stations UE#1 to UE#3 can be adjusted efficiently even in a case where the distance between the relay node N and the radio base station DeNB also changes.

### [Reference Signs List]

- RN ...: Relay node
- 10 ...: Broadcast information transmission unit
- 11 ...: Uu interface unit
- 12 ...: Un interface unit
- 13 ...: TA management unit
- UE ...: Mobile station
- 21 ...: TA acquisition unit
- 22 ...: State management unit
- 23 ...: Transmission unit

## Claims

1. A mobile communication method comprising:
a step A of acquiring, by a mobile station, individual transmission timing adjustment information from a relay node;
a step B of acquiring, by the mobile station, shared transmission timing adjustment information broadcast from the relay node; and
a step C of adjusting, by the mobile station, the transmission timing of the signal with respect to the relay node, based on the individual transmission timing adjustment information and the shared transmission timing adjustment information.

2. The mobile communication method according to claim 1, wherein in the step C, the mobile station adjusts the transmission timing of the signal to the relay node so as to be earlier than a reference timing by the sum of the time duration specified by the individual transmission timing adjustment information and the time duration specified by the shared transmission timing adjustment information.

3. The mobile communication method according to claim 1, comprising:
a step of detecting, by the mobile station, a loss of synchronization in the uplink between the mobile station and the relay node in a case where the mobile station is unable to acquire the individual transmission timing adjustment information until a first timer is expired; and
a step of detecting, by the mobile station, a loss of synchronization in the uplink between the mobile station and the relay node in a case where the mobile station is unable to acquire the shared transmission timing adjustment information until a second timer is expired, the second timer being different from the first timer.

4. The mobile communication method according to claim 3, wherein the first timer is reset when the individual transmission timing adjustment information has been acquired, and the second timer is reset when the shared transmission timing adjustment information has been acquired.

5. A mobile station, comprising: an acquisition unit configured to acquire individual transmission timing adjustment information from a relay node and to acquire shared transmission timing adjustment information broadcast from the relay node, and
a transmission unit configured to adjust the transmission timing of a signal with respect to the relay node, based on the individual transmission timing adjustment information and the shared transmission timing adjustment information.

6. The mobile station according to claim 5, wherein the transmission unit adjusts the transmission timing of the signal to the relay node so as to be earlier than a reference timing by the sum of the time duration specified by the individual transmission timing adjustment information and the time duration specified by the shared transmission timing adjustment information.

7. The mobile station according to claim 5, further comprising a state management unit configured to manage the synchronized state in the uplink between the mobile station and the relay node, wherein
the state management unit is configured to detect a loss of synchronization in the uplink between the mobile station and the relay node in a case where the acquisition unit is unable to acquire the individual transmission timing adjustment information until a first timer is expired, and
the state management unit is configured to detect a loss of synchronization in the uplink between the mobile station and the relay node in a case where the acquisition unit is unable to acquire the shared transmission timing adjustment information until a second timer is expired, the second timer being different from the first timer.

8. The mobile station according to claim 7, wherein the first timer is reset when the individual transmission timing adjustment information has been acquired, and the second timer is reset when the shared transmission timing adjustment information has been acquired.

9. A relay node for making an adjustment such that a time when a signal is being received from a radio base station and a time when a signal is being transmitted to a mobile station do not overlap, the relay node comprising:
a shared transmission timing adjustment information transmission unit configured to broadcast transmission timing adjustment information for adjusting in a shared manner the transmission timing of signals in mobile stations communicating in a cell subordinate to the relay node; and
an individual transmission timing adjustment information transmission unit configured to transmit transmission timing adjustment information for adjusting individually the transmission timing of signals in mobile stations communicating in a cell subordinate to the relay node.
